# EUROPÄISCHE PATENTSCHRIFT

(11) **EP 1 455 064 B1**
(45) Veröffentlichungstag und Bekanntmachung des Hinweises auf die Patenterteilung: **12.08.2009**
(21) Anmeldenummer: 04001909.3
(22) Anmeldetag: 29.01.2004
(51) Int. Cl.: F02B 67/06, F16H 13/10, F16H 7/02

(54) **Aggregate-Riementrieb einer Brennkraftmaschine mit einem Reibradgetriebe mit Steuereinrichtung und Nebenaggregat**
Belt drive for engine accessories with a friction wheel drive with a controller and a accessory
Entraînement à courroie d'un moteur avec entraînement par friction de roue avec un contrôleur et un accessoire de moteur

(30) Priorität: 03.03.2003 DE 10309061
(43) Veröffentlichungstag der Anmeldung: 08.09.2004
(73) Patentinhaber: Bayerische Motoren Werke Aktiengesellschaft, 80809 München (DE)
(72) Erfinder: Wimmer, Rudolf, 4431 Haidershofen (AT); Fössl, Peter, 4441 Behamberg (AT); Wieser, Philipp, 4521 Schiedlberg (AT); Lemberger, Heinz, 85774 Unterföhring (DE)

(56) Entgegenhaltungen:
- WO-A-20/04048808
- DE-A1- 3 934 884
- DE-A1- 4 039 206
- DE-U- 1 810 126

## Beschreibung

Die Erfindung bezieht sich auf einen Aggregate Riementrieb einer Brennkraftmaschine mit einem Reibradgetriebe mit Steuereinrichtung und Nebenaggregat, wobei das Reibradgetriebe ein Antriebsrad des Nebenaggregates sowie ein einerseits mit der Außenseite des Riemens und andererseits mit dem Antriebsrad in reibschlüssigen, gesteuerten Eingriff bringbares Reibrad umfasst, das über einen an einer maschinenseitig angeordneten Steuereinrichtung angelenkten Schwenkarm zu und abschaltbar ist, wobei die Steuereinrichtung einen über ein Steilgewinde gegen einen Federwiderstand hub /drehbeweglich mittels eines Servomotors betätigbaren Exzenter umfasst, und der Servomotor in einem topfartigen Gehäuse einer maschinenseitig fixierten Aufnahme der Steuereinrichtung angeordnet ist.

Eine derartige Anordnung wurde in der noch nicht veröffentlichten deutschen Patentanmeldung P 102 55 075 vorgeschlagen, wobei ein schaltbarer Elektromagnet als Servomotor dient.

Des weiteren wurde in der ebenfalls noch nicht veröffentlichten deutschen Patentanmeldung P 102 55 073 ein Exzenter der vorgenannten Steuereinrichtung nach Art eines Flügelzellenelementes gestaltet zur hydraulischen Drehverstellung für eine Zu und Abschaltung des Reibrades.

Aus der DE 39 34 884 A1 ist ein endloses Zugmittelgetriebe einer Brennkraftmaschine mit einem eine Aggregatewelle antreibenden Spannrad bekannt, bei dem das Spannrad um die Aggregatewelle schwenkbar angeordnet ist und das seine Rotationsbewegung direkt oder unter Zwischenschaltung eines mit dem Spannrad gleichachsig verbundenen Treibrades auf die Aggregatewelle oder auf ein mit dieser verbundenes Antriebsrad überträgt.

Eine Weiterbildung der gattungsgemäßen Steuereinrichtung von konzeptbedingt hoher Ausfallsicherheit mit einem Servomotor von einfachem Aufbau bei reduziertem Gewicht ist Aufgabe der Erfindung.

Diese Aufgabe ist mit dem Patentanspruch 1 dadurch gelöst, dass das topfartige Gehäuse der Steuereinrichtung mittels eines Kolbens in eine Druckkammer für ein pneumatisches oder hydraulisches Medium und in eine Stößelkammer für einen mit dem Exzenter verbundenen Stößel unterteilt ist, wobei der Stößel mit dem Kolben über eine reibungsarme Drehverbindung zusammenwirkt.

Vorteil der Erfindung ist der Fortfall eines im Gehäuse gesondert eingebauten, gewichtigen Servomotors.

Ein besonders einfacher Aufbau bei reduziertem Gewicht ist in Ausgestaltung der Erfindung dadurch erreicht, dass der Kolben als eine Membrane gestaltet ist mit einem exzenterseitig angeordneten Übertragungsring, der unter Zwischenschaltung eines Wälzlagers als Drehverbindung mit einem am Exzenter Stößel angeordneten Führungsring in Hubverbindung steht.

Der einfache Aufbau ist weiter dadurch unterstützt, dass der Mantel des topfartigen Gehäuses in über Flansche unter Zwischenlage der gummielastischen Membran miteinander verbindbare Abschnitte geteilt ist, und dass die Membran über einen eine mittige Öffnung begrenzenden Kragen mit einem zentrisch am Boden des Gehäuses angeordneten, das Steilgewinde aufweisenden Rohrfortsatz dicht umschließt, wobei der Kragen mittels einer Klemmbuchse am Rohrfortsatz fixiert ist.

Bezüglich vorteilhaft geringen Gewichtes der Steuereinrichtung ist die Druckkammer mit Druckluft aus einem aufladbaren Druckluftspeicher oder mit Unterdruck beaufschlagt. Der Druckluftspeicher kann entweder ein separates Ausrüstungsteil der Brennkraftmaschine oder eines von einer Brennkraftmaschine angetriebenen Fahrzeuges sein, wogegen der Unterdruck von einer Unterdruck - Pumpe abgenommen ist.

Anstelle der pneumatischen Beaufschlagung kann auch eine hydraulische Beaufschlagung gewählt sein, wobei die Druckkammer vorzugsweise mit Schmieröl aus dem Schmierkreislauf einer Brennkraftmaschine gesteuert beaufschlagt ist.

Die Erfindung ist anhand eines in der Zeichnung dargestellten, bevorzugten Ausführungsbeispiels beschrieben.
Es zeigt:
- Fig.1: ein stirnseitig an einer abschnittsweise gezeigten Brennkraftmaschine mit einem Riementrieb zusammenwirkend angeordnetes Reibradgetriebe für ein außerhalb des Riementriebes gesondert angeordnetes Nebenaggregat, insbesondere eine Kühlmittelpumpe,
- Fig. 2: eine Steuereinrichtung für das Reibradgetriebe in Schnittdarstellung mit nicht aktiviertem, erfindungsgemäßen Steuermotor für ständigen Reib - radeingriff,
- Fig. 3: die Steuereinrichtung mit aktiviertem Servomotor für unterbrochenen Reibradeingriff,
- Fig. 4: die Steuereinrichtung mit das Reibrad tragenden Schwenkarm in Explosionsdarstellung.

In einem Riementrieb 1 für nicht gezeigte Aggregate einer nur abschnittsweise dargestellten Brennkraftmaschine 2 ist ein Reibradgetriebe 3 vorgesehen für ein außerhalb des Bereiches des Riementriebes 1 angeordnetes Nebenaggregat 4. Dieses ist vorzugsweise eine Kühlmittelpumpe für den Kühlkreislauf der flüssigkeitsgekühlten Brennkraftmaschine 2 .

Das Reibradgetriebe 3 umfasst ein in einem Umschlingungsbereich des Riemens 5 eines kurbelwellenseitigen Triebrades 6 der Brennkraftmaschine 2 mit der Außenseite 7 des Riemens 5 reibschlüssig zusammenwirkendes Reibrad 8 sowie ein mit dem Reibrad 8 reibschlüssig antreibbares Antriebsrad 9 der Kühlmittelpumpe 4. Mittels einer Steuereinrichtung 10 ist das Reibrad 8 zum einen bei einem Kaltstart der Brennkraftmaschine 2 und zum anderen bei hohen Drehzahlen zur Verringerung der Leistungsaufnahme außer Eingriff mit dem Antriebsrad 9 der Kühlmittelpumpe 4 gesteuert. Die Steuerung des Reibrades 8 ist mittels eines das Reibrad 8 mit der Steuereinrichtung 10 verbindenden Schwenkarmes 11 bewirkt.

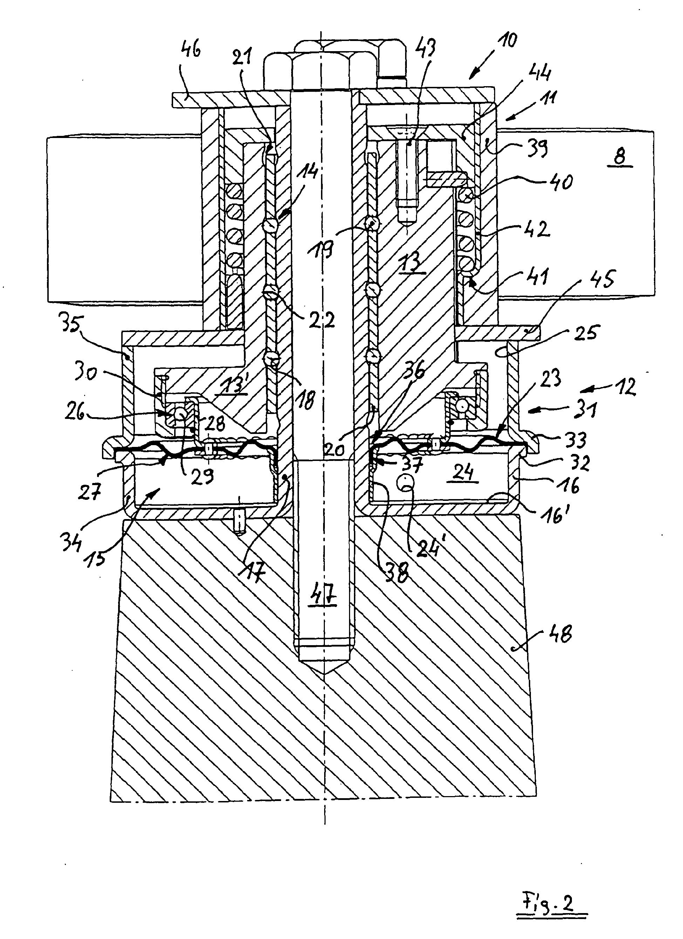

Wie aus Fig. 2 ersichtlich, steht hierfür der Schwenkarm 11 mit einem in einer maschinenseitig fixierten Aufnahme 12 angeordneten Exzenter 13 in Verbindung, wobei der Exzenter 13 in der Aufnahme 12 über ein Steilgewinde 14 geführt angeordnet ist. Eine über das Steilgewinde 14 mittels eines Servomotors 15 bewirkte Hubbewegung des Exzenters 13 bewirkt an diesem gleichzeitig eine Drehbewegung, durch die der Schwenkarm 11 das Reibrad 8 außer Eingriff mit dem Antriebsrad 9 der Kühlmittelpumpe 4 steuert. Mit rückgängig gesteuerter Hubbewegung ist das Reibrad 8 mit der Außenseite 7 des Riemens 5 und dem Antriebsrad 9 in jeweils reibschlüssigen Eingriff gesteuert.

Die Steuereinrichtung 10 umfasst weiter eine als topfartiges Gehäuse 16 gestaltete Aufnahme 12, wobei am Boden 16' des Gehäuses 16 zentrisch ein Rohrfortsatz 17 angeordnet ist. Dieser weist am Außenumfang angeordnete erste Gewindegänge 18 auf für ein Kugel-Steilgewinde 19, wobei in einem koaxial zum Rohrfortsatz 17 angeordneten Käfig 20 gesicherte Gewindekugeln in am Innenumfang einer den Exzenter 13 durchsetzenden Durchbrechung 21 ausgebildete zweite Gewindegänge 22 eingreifen.

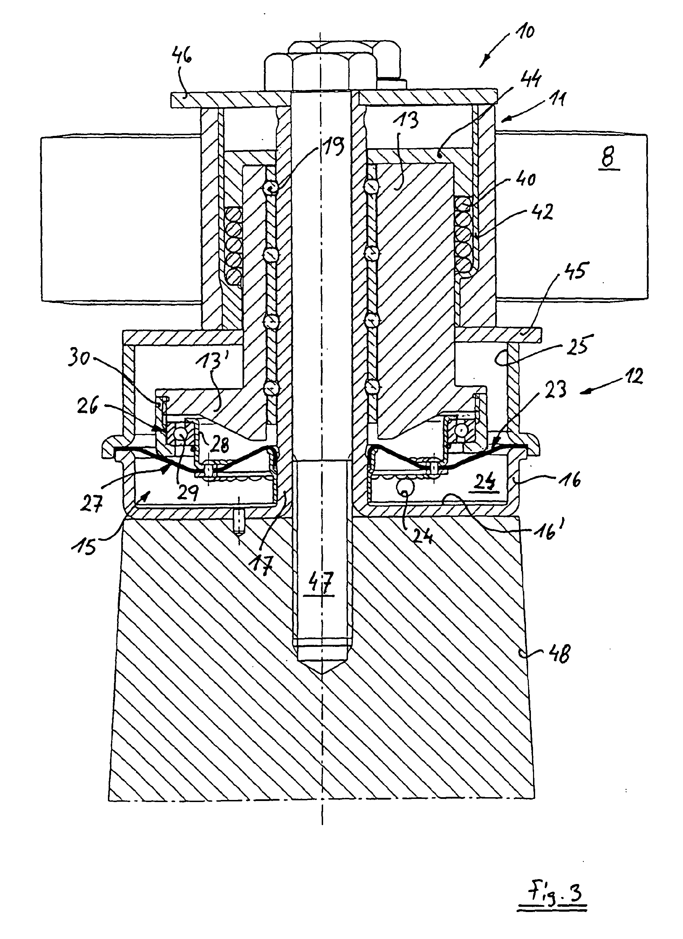

In weiterer Ausgestaltung des topfartigen Gehäuses 16 ist dieses zur Anordnung des Servomotors 15 mittels eines Kolbens 23 in eine Druckkammer 24 für ein pneumatisches oder hydraulisches Medium und in eine Stößelkammer 25 für einen mit dem Exzenter 13 verbundenen Stößel 13' unterteilt. Wie ferner aus den Figuren 2 und 3 ersichtlich, ist zwischen dem Stößel 13' und dem Kolben 23 eine reibungsarme Drehverbindung 26 vorgesehen.
Vorzugsweise ist der Kolben 23 als eine Membrane 27 gestaltet mit einem exzenterseitig angeordneten Übertragungsring 28, der unter Zwischenschaltung eines Wälzlagers 29 als Drehverbindung 26 mit einem am Exzenter-Stößel 13' angeordneten Führungsring 30 in Hubverbindung steht.

Zur Erzielung eines einfachen, gewichtsreduzierten Aufbaues der Steuereinrichtung 10 und des Servomotors 15 ist der Mantel 31 des topfartigen Gehäuses 16 in über Flansche 32, 33 unter Zwischenlage der gummielastischen Membran 27 miteinander verbindbare Abschnitte 34, 35 geteilt. Ferner ist die Membrane 27 derart gestaltet, dass sie über einen eine mittige Öffnung 36 begrenzenden Kragen 37 mit dem zentrisch am Boden 16' des Gehäuses 16 angeordneten, das Kugel-Steilgewinde 19 aufweisenden Rohrfortsatz 17 dicht umschließt, wobei der Kragen 37 mittels einer Klemmbuchse 38 am Rohrfortsatz 17 fixiert ist.

Die Druckkammer 24 des Servomotors 15 ist vorzugsweise mit Unterdruck beaufschlagt. Der Unterdruck wirkt über eine Leitung 24', die mit einer Vakuumpumpe in Verbindung steht. Eine Druckbeaufschlagung der Druckkammer 24 ist mit Druckluft oder hydraulisch mittels Schmieröl aus dem Schmierölkreislauf der Brennkraftmaschine 2 möglich bei entsprechend angepasster Steuereinrichtung 10.

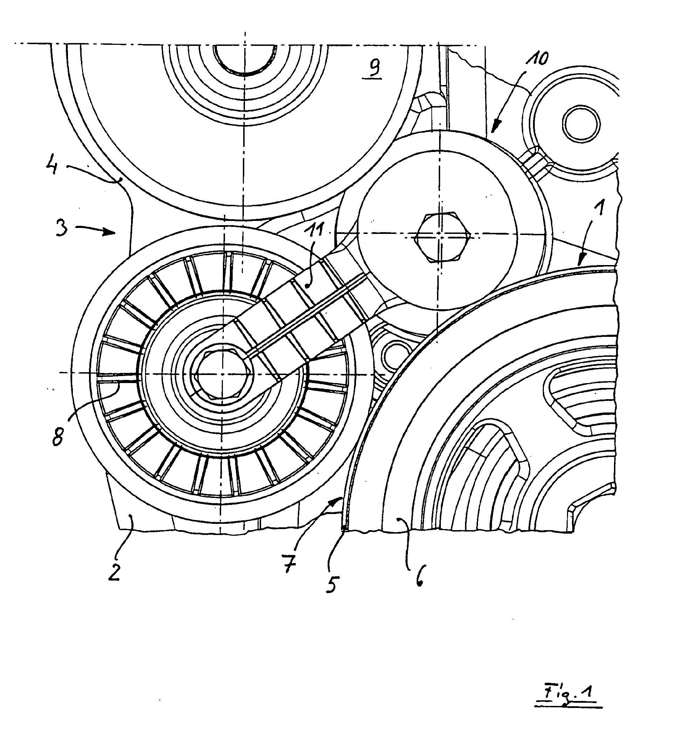

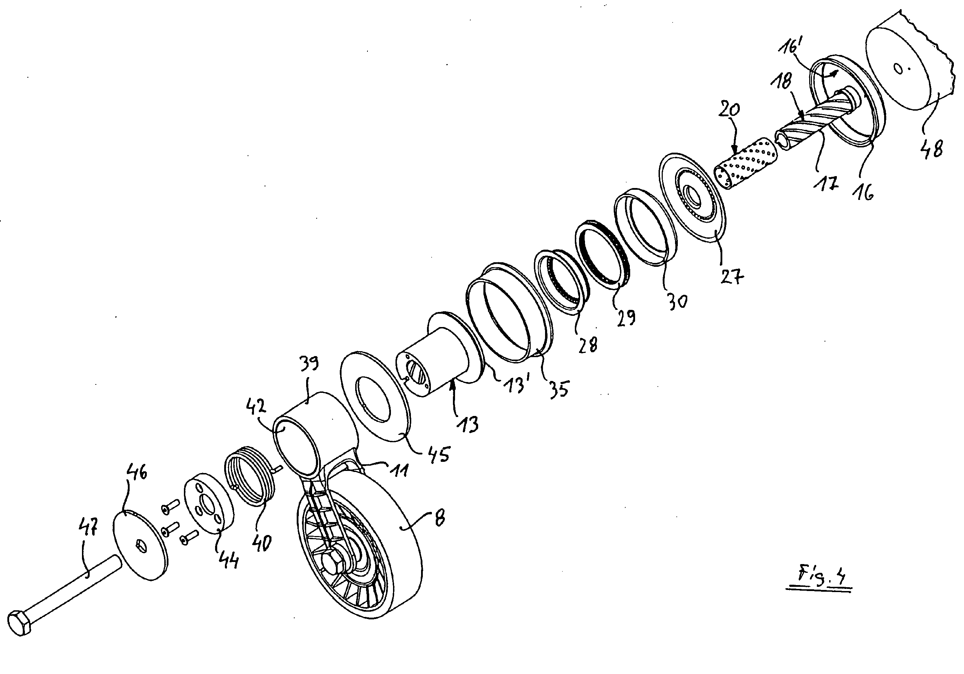

Der aus den Figuren 1 und 4 ersichtliche, das Reibrad 8 führende Schwenkarm 11 ist aus einem Kunststoff gebildet und wirkt über ein Auge 39 mit dem Exzenter 13 zusammen. In dem Auge 39 ist eine Schraubendrehfeder 40 angeordnet, durch deren Drehvorspannung der Exzenter 13 bei nicht aktiviertem Servomotor 15 über das Kugel-Steilgewinde 19 in eine Position gedreht ist, in der der Schwenkarm 11 zugbelastet das Reibrad 8 in Wirkeingriff mit dem Antriebsrad 9 der Kühlmittelpumpe 4 hält.

Einer kompakten Bauweise der Steuereinrichtung 10 förderlich ist es, dass die in dem Auge 39 des Schwenkarmes 11 gegen einen Absatz 41 eines in dem Auge 39 zur Verstärkung angeordneten Metallgehäuses 42 einerseits anliegende Schraubendrehfeder 40 andererseits über einen in dem Metallgehäuse 42 mit Spiel zentrierten und mit dem Exzenter 13 über eine Verschraubung 43 verbundenen Deckel 44 axial gesichert gehalten ist. Wie aus Fig.2 ersichtlich, ist die mit Drehvorspannung angeordnete Schraubendrehfeder 40 einenends mit dem Exzenter 13 und andernends mit dem Auge 39 des Schwenkarmes 11 jeweils drehfest verbunden. Diese Federanordnung ermöglicht eine hohe Betriebssicherheit dadurch, dass bei Ausfall des Servomotors 15 der Exzenter 13 über das Kugel-Steigewinde 19 in eine Position gedreht ist, mittels der das Reibrad 8 unter Zugbelastung des Schwenkarmes 11 in reibschlüssigen Eingriff mit dem Riemen 5 und dem Antriebsrad 9 gebracht und gehalten ist. Damit bleibt die Kühlmittelpumpe 4 in vorteilhafter Weise in Antriebsverbindung über das Reibradgetriebe 3 mit dem Riementrieb 1.

Bei durch Unterdruck aktiviertem Servomotor 15 gemäß Fig.3 ist der Exzenter 13 über das Kugel-Steilgewinde 19 in eine Gegenposition gedreht derart, dass das Reibrad 8 über den exzenterbetätigten Schwenkarm 11 außer Eingriff mit dem Antriebsrad 9 gebracht und gehalten ist, Fig.1 Hierbei ist mittels der auf den Schwenkarm 11 über ihre Drehvorspannung einwirkende Schraubendrehfeder 40 das Reibrad 8 äquidistant entlang der Riemenaußenseite 7 im Umschlingungsbereich des Triebrades 6 geführt und gegen die Riemenaußenseite 7 angedrückt zum reibschlüssigen Freilauf des Reibrades 8. Damit ist zum einen eine reibschlüssige Mitnahme des Reibrades 8 störende Verschmutzung der Riemenaußenseite 7 unterbunden und zum anderen ist beim gesteuerten Eingriff des Reibrades 8 mit dem Antriebsrad 9 lediglich die Kühlmittelpumpe 4 einer Drehbeschleunigung ausgesetzt.

Im weiteren ist zur Kapselung des Auges 39 einerseits und der Stößelkammer 25 andererseits ein mit dem Exzenter 13 drehfest verbundener Deckel 45 vorgesehen, und andererseits ein auf dem Rohrfortsatz 17 stirnseitig aufliegender, drehfest gesicherter Abschlussdeckel 46, wobei die gesammte Steuereinrichtung 10 einschließlich des das Reibrad 8 tragenden Schwenkarmes 11 mittels eines die Deckel 44, 45, 46 und den Rohrfortsatz 17 durchsetzenden Schraubbolzen 47 an einem maschinenseitigen Butzen 48 stirnseitig der Brennkraftmaschine 2 im freien Bereich zwischen Triebrad 6 und benachbartem Antriebsrad 9 der Kühlmittelpumpe 4 angeordnet ist zur vorteilhaften Platzausnutzung.

Die bedarfsweise Abschaltung des Nebenaggregates 4 -Kühlmittelpumpe - kann durch einen Parameter der Brennkraftmaschine 2 oder durch einen mittels eines Kennfeldes einer Motronic angesteuerten Servomotor 15 veranlasst sein. Dies insbesondere bei einem Kaltstart der Brennkraftmaschine 2, ferner auch in deren Hochdrehzahlbereich mit beispielsweise intermittierender Zu - und Abschaltung zur Reduzierung einer Leistungsaufnahme.

## Patentansprüche

1. Aggregate-Riementrieb einer Brennkraftmaschine mit einem Reibradgetriebe mit Steuereinrichtung und Nebenaggregat,
- wobei das Reibradgetriebe (3) ein Antriebsrad (9) des Nebenaggregates (4) sowie ein einerseits mit der Außenseite (7) des Riemens (5) und andererseits mit dem Antriebsrad (9) in reibschlüssigen, gesteuerten Eingriff bringbares Reibrad (8) umfasst, **dadurch gekennzeichnet, dass** das Reibrad (8)
- über einen an einer maschinenseitig angeordneten Steuereinrichtung (10) angelenkten Schwenkarm (11) zu- und anschaltbar ist, wobei
- die Steuereinrichtung (10) einen über ein Steilgewinde (14) gegen einen Federwiderstand hub-drehbeweglich mittels eines Servomotors (15) betätigbaren Exzenter (13) umfasst, und
- der Servomotor (15) in einem topfartigen Gehäuse (16) einer maschinenseitig fixierten Aufnahme (12) der Steuereinrichtung (10) angeordnet ist,
- das topfartige Gehäuse (16) mittels eines Kolbens (23) in eine Druckkammer (24) für ein pneumatisches oder hydraulisches Medium und
- in eine Stößelkammer (25) für einen mit dem Exzenter (13) verbundenen Stößel (13') unterteilt ist, wobei
- der Stößel (13') mit dem Kolben (23) über eine reibungsarme Drehverbindung (26) zusammenwirkt.

2. Aggregate-Riementrieb nach Anspruch 1, **dadurch gekennzeichnet,**
- **dass** der Kolben (23) als eine Membrane (27) gestaltet ist mit einem exzenterseitig angeordneten Übertragungsring (28), der
- unter Zwischenschaltung eines Wälzlagers (29) als Drehverbindung (26) mit einem am Exzenter-Stößel (13') angeordneten Führungsring (30) in Hub-Drehverbindung steht.

3. Aggregate-Riementrieb nach Anspruch 1 oder 2, **dadurch gekennzeichnet,**
- **dass** ein Mantel (31) des topfartigen Gehäuses (16) in über Flansche (32, 33) unter Zwischenlage einer gummielastischen Membran (27) miteinander verbindbare Abschnitte (34, 35) geteilt ist, und
- **dass** die Membran (27) über einen eine mittige Öffnung (36) begrenzenden Kragen (37) mit einem zentrisch am Boden (16') des Gehäuses (16) angeordneten, das Steilgewinde (14) aufweisenden Rohrfortsatz (17) dicht umschließt, wobei
- der Kragen (37) mittels einer Klemmbuchse (38) am Rohrfortsatz (17) fixiert ist.

4. Aggregate-Riementrieb nach den Ansprüchen 1- 3, **dadurch gekennzeichnet,**
- **dass** die Druckkammer (24) mit Unterdruck oder Druckluft gesteuert beaufschlagt ist.

5. Aggregate-Riementrieb nach den Ansprüchen 1 bis 3, **dadurch gekennzeichnet,**
- **dass** die Druckkammer (24) mit Schmieröl als hydraulischem Medium aus dem Schmierölkreislauf der Brennkraftmaschine (2) gesteuert beaufschlagt ist.

6. Aggregate-Riementrieb nach einem der Ansprüche 1 bis 5, **dadurch gekennzeichnet,**
- **dass** das Nebenaggregat (4) eine der Brennkraftmaschine dienende Kühlmittelpumpe ist, wobei
- das Reibrad (8) außer Eingriff mit dem Antriebsrad (9) mittels des jeweiligen Servomotors (15) über einen Parameter oder über ein in einer Motronic abgelegtes Kennfeld gesteuert ist.

## Claims

1. A belt drive for internal combustion engine accessories with a friction wheel drive with a controller and an auxiliary unit,
- wherein the friction wheel drive (3) comprises a drive wheel (9) of the auxiliary unit (4) as well as a friction wheel (8) which can be brought into frictional, controlled engagement, on the one hand, with the outside (7) of the belt (5) and, on the other hand, with the drive wheel (9),
**characterised in that**
- the friction wheel (8) can be switched on and off by means of a pivot arm (11) articulated to a control device (10) arranged on one machine side, wherein
- the control device (10) comprises an eccentric (13) which can be actuated to move in a lift-rotary manner by means of a servomotor (15) via a steep thread (14) against a spring resistance, and
- the servomotor (15) is arranged in a pot-like housing (16) of a receiver (12) of the control device (10) fixed on the machine side,
- the pot-like housing (16) is divided by means of a piston (23) into a pressure chamber (24) for a pneumatic or hydraulic medium, and
- into a lifter chamber (25) for a lifter (13') connected to the eccentric (13), wherein
- the lifter (13') cooperates with the piston (23) by means of a low-friction rotary connection (26).

2. A belt drive according to claim 1, **characterised in that**
- the piston (23) is formed as a membrane (27) with a transmission ring (28) arranged on the eccentric side, which
- with the imposition of a roller bearing (29), as a rotary connection (26), is in a lift-rotary connection with a guide ring (30) arranged on the eccentric lifter (13').

3. A belt drive according to claim 1 or claim 2, **characterised in that**
- a casing (31) of the pot-like housing (16) is divided into portions (34, 35) which can be connected to one another by means of flanges (32, 33) with the interposition of a rubber-elastics material membrane (27), and
- **in that** the membrane (27) tightly encloses by means of a collar (37) limiting a central opening (36), with a tube continuation (17) arranged centrally on the base (16') of the housing (16) and having the steep thread (14), wherein
- the collar (37) is fixed by means of a clamping bush (38) on the tube continuation (17).

4. A belt drive according to any one of claims 1 to 3, **characterised in that**
- the pressure chamber (24) is loaded in a controlled manner with negative pressure or compressed air.

5. A belt drive according to any one of claims 1 to 3, **characterised in that**
- the pressure chamber (24) is loaded in a controlled manner with lubricating oil as the hydraulic medium from the lubricating oil circuit of the internal combustion engine (2).

6. A belt drive according to any one of claims 1 to 5, **characterised in that**
- the auxiliary unit (4) is a coolant pump serving the internal combustion engine, wherein
- the friction wheel (8) out of engagement with the drive wheel (9) is controlled by the respective servomotor (15) by means of a parameter or by means of a characteristic map stored in a Motronic^{®} .

## Revendications

1. Unité d'entraînement à transmission par courroie d'un moteur à combustion interne comprenant une transmission à roue à friction avec une installation de commande et un équipement accessoire,
la transmission à roue à friction (3) comprend une roue d'entraînement (9) de l'équipement accessoire (4) ainsi qu'une roue à friction (8) qui peut être mise en prise avec d'une part, le côté extérieur (7) de la courroie (5) et d'autre part, avec la roue d'entraînement (9), par une prise par friction, commandée,
**caractérisée en ce que**
la roue à friction (8) peut être activée ou neutralisée par l'intermédiaire d'un bras de pivotement (11) articulé à une installation de commande (10) montée du côté du moteur,
l'installation de commande (10) comprend un excentrique (13) qui peut être actionné par l'intermédiaire d'une vis à pas raide (14) contre la résistance opposée par un ressort, de façon mobile en rotation et en translation par l'intermédiaire d'un servomoteur (15),
le servomoteur (15) est logé dans un boîtier (16) en forme de pot d'un logement (12) de l'installation de commande (10), logement fixé du côté extérieur du moteur,
le boîtier (16) en forme de pot est subdivisé par un piston (23) en une chambre de pression (24) pour un milieu pneumatique ou hydraulique et une chambre de poussoir (25) pour un poussoir (13') relié à l'excentrique (13), et
le poussoir (13') coopère avec le piston (23) par l'intermédiaire d'une liaison d'entraînement en rotation (26) à faible friction.

2. Unité d'entraînement à courroie selon la revendication 1,
**caractérisée en ce que**
- le piston (23) est réalisé sous la forme d'une membrane (27) avec une bague de transmission (28) installée de façon excentrée, et
- en liaison de rotation et de translation avec une bague de guidage (30) installée sur le poussoir d'excentrique (13') avec interposition d'un palier à roulement (29) comme liaison de rotation (26).

3. Unité d'entraînement à courroie selon les revendications 1 ou 2, **caractérisée en ce qu'**
- une enveloppe (31) du boîtier (16) en forme de pot est divisée en des segments (34, 35) reliés par des brides (32, 33) avec interposition d'une membrane (27) élastique comme du caoutchouc,
- la membrane (27) est montée par l'intermédiaire d'une collerette (37) délimitant une ouverture centrale (36) avec un prolongement tubulaire (17) centré par rapport au fond (16') du boîtier (16) et entourant de manière étanche le filetage à grand pas (14) du prolongement tubulaire (17), et
- la collerette (37) est fixée au prolongement tubulaire (17) par un manchon de serrage (38).

4. Unité d'entraînement à courroie selon les revendications 1 à 3,
**caractérisée en ce que**
la chambre de pression (24) est commandée par application d'une dépression ou d'air comprimé.

5. Unité d'entraînement à courroie selon les revendications 1 à 3,
**caractérisée en ce que**
la chambre de pression (24) est sollicitée de façon commandée par de l'huile de graissage comme milieu hydraulique provenant du circuit d'huile de graissage du moteur à combustion interne (2).

6. Unité d'entraînement à courroie selon l'une des revendications 1 à 5,
**caractérisée en ce que**
- l'équipement auxiliaire est une pompe d'agent de refroidissement du moteur à combustion interne, et
- la roue à friction (8) est commandée pour être hors de prise avec la roue d'entraînement (9) par l'intermédiaire du servomoteur (15) respectif par l'intermédiaire d'un paramètre ou par un champ de caractéristiques enregistrées dans la commande électronique du moteur.
